# EUROPÄISCHE PATENTANMELDUNG

(11) **EP 1 039 156 A2**
(43) Veröffentlichungstag der Anmeldung: **27.09.2000**
(21) Anmeldenummer: 00103833.0
(22) Anmeldetag: 24.02.2000
(51) Int. Cl.: F16B 37/14

(54) **Kunststoff-Schutzkappe für Schraubverbindungen**

(30) Priorität: 24.03.1999 DE 19913164
(71) Anmelder: Paul Müller Technische Produkte GmbH, 34212 Melsungen (DE)
(72) Erfinder: Achler, Rainer, 34212 Melsungen-Kirchhof (DE)
(74) Vertreter: Seewald, Jürgen, Dipl.-Ing.

(57) **Zusammenfassung**

Die vorliegende Erfindung betrifft eine Kunststoff-Schutzkappe (4) für Schraubverbindungen (1,2), die an ihrem offenen Stirnrand eine Dichtlippe (7) mit geringerer Wandstärke als der sich einstückig anschließende Bereich der Schutzkappe aufweist. Aufgabe der vorliegenden Erfindung ist es, eine derartige Schutzkappe (4) zur Verfügung zu stellen, die sehr einfach aufgebaut ist und dennoch einen ausgezeichneten, feuchtigkeitsdichten Festsitz auf der Schraubverbindung (1,2) garantiert. Gelöst wird diese Aufgabe mit einer derartigen Schutzkappe dadurch, daß diese aus einem geschlossenzellig geschäumten thermoplastischen Kunststoff besteht und unter Ausnutzung der Rückstellkraft des Kunststoff-Schaums auf der Schraubverbindung (1.2) festlegbar ist.

## Beschreibung

Die vorliegende Erfindung betrifft eine Kunststoff-Schutzkappe für Schraubverbindungen, die an ihrem offenen Stirnrand eine Dichtlippe mit geringerer Wandstärke als der sich einstückig anschließende Bereich der Schutzkappe aufweist.

Aus DE 30 33 714 C2 ist eine Schutzkappe mit einem nachgiebigen Körper aus weichem Kunstharz oder synthetischem Kautschuk, beispielsweise aus Polyvinylchlorid-Harz, Polyethylen-Harz, Polyurethan-Harz, Fluor-Harz oder Silikonkautschuk, bekannt. Diese Schutzkappe besitzt ein rohrförmiges Basisteil zur Aufnahme der Mutter und ein sich daran anschließendes Kopfteil mit einem Innengewinde. An die Innenwand des Basisteils sind Vorsprünge angeformt, die in Nuten oder Vertiefungen der Mutter formschlüssig eingreifen können. Zum Aufsetzen der Schutzkappe auf die Schraubverbindung wird das Basisteil nach außen gestülpt. Das ist aufgrund der Nachgiebigkeit des Materials der Schutzkappe möglich. Die Schutzkappe wird nun mit dem im Kopfteil vorgesehenen Gewinde auf den Gewindebolzen aufgeschraubt, bis der zwischen dem Basisteil und dem Kopfteil vorhandene Absatz auf der Mutter aufliegt. Das Basisteil wird dann auf die Mutter gestülpt und greift mit seinen Vorsprüngen in die in der Außenwand der Mutter vorgesehene Nut bzw. Vertiefungen formschlüssig ein. Wenn der Schraubbolzen nicht aus der Mutter herausragt, das Kopfteil also nicht auf diesen aufgeschraubt werden kann, erfolgt die Festlegung der Schutzkappe lediglich durch Formschluß seiner Vorsprünge mit der Mutter.

Die Schutzkappe gemäß DE 30 33 714 C2 hat den großen Nachteil, daß spezielle Muttern, also keine Normteile, verwendet werden müssen. Des weiteren kann durch das Aufschrauben der Schutzkappe ihr Stirnrand nicht auf das zu befestigende Teil angepreßt werden, da der erforderliche Formschluß mit der Mutter dies verhindert. Zudem muß in nachteiliger Weise für jedes Gewinde der verwendeten Bolzen eine entsprechende Schutzkappe gefertigt werden.

In der DE 32 18 466 C1 ist eine Schutzkappe beschrieben, mit der ein wirkungsvolles Festspannen auf der jeweiligen Schraubverbindung und daraus resultierend ein hoher Anpreßdruck mit guter Abdichtung erreicht werden soll. Diese Schutzkappe weist stirnseitig ein Innengewinde auf, das mit dem Außengewinde eines Ringes zusammenwirkt. An der dem zu befestigenden Bauteil zugewandten Stirnseite des Ringes sind keilförmige Nasen ausgebildet. Die Schutzkappe wird zu ihrer Befestigung mit eingeschraubtem Ring axial über die Verschraubung gesteckt. Dabei gleiten die Nasen des Ringes auf den Außenflächen der Mutter nach unten. Wenn die Stirnfläche der Schutzkappe, an der eine Dichtlippe ausgebildet ist, auf dem zu befestigenden Bauteil aufsitzt, werden Schutzkappe und Ring gemeinsam verdreht, so daß die Nasen unter die Facettenflächen an den Ecken der Mutter gelangen und sich dort verkeilen. Durch weiteres Drehen der Schutzkappe auf dem Gewindering kann dann der gewünschte Anpreßdruck der Dichtlippen auf dem zu befestigenden Bauteil erreicht werden.

Über das Material der Schutzkappe sind in DE 32 18 466 C1 keine Angaben zu finden. Ein wesentlicher Nachteil dieser Schutzkappe ist darin zu sehen, daß ein zusätzliches Bauteil in Form des Gewinderinges erforderlich ist.

Eine weitere Schutzkappe ist in DE 33 35 723 C2 offenbart. Hierbei handelt es sich um eine Kappe aus Kunststoff zum Aufklemmen auf eine Sechskant-Mutter. Die Schutzkappe hat ein Kopfteil, welches als Außen-Sechskant zum Ansetzen eines Schlüssels ausgeführt ist und einen sich daran anschließenden Zylindermantel. An der Innenseite dieses Zylindermantels sind Profile so ausgebildet, daß die Schutzkappe zum einen in axialer Richtung auf die Sechskant-Mutter aufschiebbar und dann zum anderen durch einen auf dem Sechskant des Kopfteils aufgesetzten Steckschlüssel verdrehbar ist. Durch dieses Verdrehen laufen die Profile auf die Ecken der Mutter auf. Der Zylindermantel der Schutzkappe federt dadurch kurzzeitig elastisch nach außen, so daß die Profile in die Mutterecken einrasten können. In dieser Stellung sitzen die Profile form- und kraftschlüssig auf den Kanten der Sechskant-Mutter. Durch Verdrehen der Schutzkappe in die Gegenrichtung kann diese wieder von der Mutter gelöst werden.

Diese Schutzkappe ist ein relativ aufwendiges Spritzgußteil, was sich in den Kosten niederschlägt. Sie besitzt, wie andere Schutzkappen auch, an ihrer Stirnseite eine Dichtlippe, jedoch kann durch das Verdrehen der Schutzkappe kein Anpreßdruck realisiert werden, da die dadurch erzeugten Haltekräfte radial, nicht aber axial wirken.

In DE 33 01 527 C2 ist eine Schutzkappe mit einer Innenzylinder-Wand beschrieben, von der mehrere auf den Umfang verteilte Stege radial nach innen ragen. Die Scheitel dieser Stege liegen auf einem Kreisbogen, wobei diese spitzwinklig ausgeführt sind. Zur Befestigung wird die Schutzkappe auf das Ende des Gewindebolzens der zu schützenden Schraubverbindung aufgesetzt und gedreht. Dadurch schneidet sich das Gewinde des Gewindebolzens in die spitzwinkligen Längskanten der Stege ein. Das Gewinde wird also erst durch das Aufschrauben der Schutzkappe auf den Gewindebolzen ausgebildet. Die Schutzkappe besteht aus einem thermoplastischen Kunststoff, wodurch eine große Reibung zwischen dem Gewinde des Gewindebolzens und dem in die Stege eingeschnittenen Gewinde besteht. Die Schutzkappe kann dadurch als Kontermutter wirken, wenn sie, wie in einer Ausführungsform, mit ihrer Stirnseite auf die Stirnfläche der Mutter aufgeschraubt wird.

In einer anderen Ausführungsform übergreift die Schutzkappe zusätzlich die Mutter. Dazu weist die Schutzkappe an ihrer offenen Stirnseite einen stegfreien Bereich auf, in dem die Mutter aufgenommen wird. Die Stirnfläche der Schutzkappe wird hier auf das durch die Schraubverbindung zu befestigende Bauteil geschraubt.

In beiden Ausführungsformen dieser Schutzkappe ist an der offenen Stirnseite eine Dichtlippe vorgesehen, die aufgrund der Aufschraubbarkeit der Schutzkappe auf den Gewindebolzen der Schraubverbindung auch mit genügend großem Druck an die Stirnfläche der Mutter bzw. an das Bauteil angepreßt werden kann.

Um ein Selbstschneiden des Gewindes überhaupt zu ermöglichen, müssen die Längskanten der Stege spitzwinklig ausgeführt werden, da das verwendete thermoplastische Material relativ hart ist, was auch auf die einstückig ausgebildete Dichtlippe an der Stirnseite der Schutzkappe zutrifft. Es kann daher passieren, daß die Dichtlippe bei unebener Oberfläche der Gegenfläche nicht auf dem gesamten Umfang dicht anliegt. Diese Dichtheit kann durch weiteres Anziehen der Schutzkappe auch nur in Grenzen hergestellt werden, da bei zu starkem Anziehen Spannungsrisse auftreten. Wenn aufgrund nicht ausreichend abdichtender Dichtlippe Feuchtigkeit in die Schutzkappe eingedrungen ist, kann diese auch auf das Gewinde des Gewindebolzens korrodierend einwirken, da die Stege nur an einem geringen Teil des Bolzengewindes anliegen.

In US 2,878,905 ist eine Schutzkappe für Blechschrauben beschrieben. Diese besteht aus einem thermoplastischen Material und ist ein Gußteil. Sie hat eine leicht kegelige Außenform mit einem geschlossenen kugelförmigen Kopf. Weiterhin besitzt sie eine innere Aussparung mit ringförmigen Rippen, deren Innendurchmesser geringfügig kleiner ist als der Kerndurchmesser der Blechschraube. In der Anwendung wird die Schutzkappe mit axialem Druck auf das die zusammengeschraubten Blechteile überragende Gewinde der Blechschraube gedrückt, bis sie mit ihrem offenen Ende auf dem einen der Blechteile aufliegt. Da sich das scharfe Gewinde der Blechschraube bei diesem Vorgang in die Schutzkappe eingräbt, ist deren sicherer Halt gewährleistet.

Aufgabe der vorliegenden Erfindung ist es, eine gattungsgemäße Schutzkappe zur Verfügung zu stellen, die sehr einfach aufgebaut ist und dennoch einen ausgezeichneten, feuchtigkeitsdichten Festsitz auf der Schraubverbindung garantiert.

Gelöst wird diese Aufgabe mit einer gattungsgemäßen Schutzkappe dadurch, daß diese aus geschlossenzellig geschäumtem thermoplastischem Kunststoff besteht und unter Ausnutzung der Rückstellkraft des Kunststoff-Schaums auf der Schraubverbindung festlegbar ist.

In einer vorteilhaften Ausführungsform ist die Schutzkappe auf ihrer Außenseite als Mehrkant-Profil zum Ansatz eines Schlüssels ausgebildet. Des weiteren weist sie ein zylindrisches Sackloch auf, dessen Durchmesser kleiner ist als der Außendurchmesser des Gewindebolzens. Zum gegen Korrosion schützenden Festlegen der Schutzkappe auf der Schraubverbindung wird diese auf das über die Mutter überstehende Ende des Gewindebolzens aufgesetzt und mittels eines z.B. Steck- oder Maulschlüssels auf das Gewinde gedreht. Das Gewinde des Gewindebolzens schneidet sich dadurch in die Schaumstruktur ein, die dadurch zwar oberflächlich zerstört wird, in dem oberflächennahen Bereich aber elastisch einfedert. Daraus resultiert eine Rückstellkraft des Kunststoff-Schaums, so daß dieser das Gewinde des Bolzens fest umschließt. Die erfindungsgemäße Schutzkappe ist aufgrund der Rückstellkraft nicht mit bloßen Händen, sondern nur mit einem Schlüssel aufschraubbar. Insbesondere bietet sich hier der Einsatz eines Akkuschraubers an, da das Sackloch beim Aufschrauben der Schutzkappe selbst zentrierend wirkt. Die Haltekräfte des Kunststoff-Schaums sind so groß, daß auf jeden Fall Selbsthemmung der Schutzkappe auf dem Bolzengewinde vorliegt. Der Festsitz der Schutzkappe ist so groß, daß sie nur mit einem Schlüssel gelöst werden kann. Aufgrund der Selbsthemmung wirkt die Schutzkappe beim Aufdrehen auf die Stirnfläche der Mutter als Kontermutter.

Die Dichtlippe ist dünnwandiger als der Nachbarbereich der Schutzkappe ausgeführt. Sie ist dadurch besonders komprimierbar, so daß sie sich jeder Unebenheit der Stirnseite der Mutter anpaßt. Dadurch ist mit großer Sicherheit ein feuchtigkeitsdichter Abschluß der Schutzkappe gegeben. Die Schaumstruktur der Schutzkappe bietet darüber hinaus den Vorteil, daß ab einem bestimmten Anpreßdruck der Dichtlippe der verwendete Schlüssel, das trifft auch für einen Akkuschrauber zu, auf dem Mehrkant-Profil durchrutscht, also nicht mehr greift, da der Kunststoff-Schaum ab einem gewissen Drehmoment natürlich auch auf der Außenseite entsprechend einfedert. Damit ist auf natürliche Weise eine "Uberlastsicherung" realisiert, die verhindert, daß die Dichtlippe unnötig breit gequetscht wird.

Aber selbst, wenn die Dichtlippe z.B. durch mechanischen Einfluß undicht werden würde, wäre das Gewinde des Gewindebolzens immer noch vor Feuchtigkeit geschützt, da die Schutzkappe vollflächig und mit Druck an dem Gewinde anliegt.

In einer abgewandelten Ausführungsform der Erfindung kann die Schutzkappe zusätzlich zu dem oben geschilderten, schützenden Abdichten des Bolzengewindes auch die Mutter umhüllen. Das Sackloch der Schutzkappe ist dann in einem Absatz zur offenen Stirnseite hin auf einen Durchmesser erweitert, der gleich dem oder größer als der Durchmesser eines die Mutter umhüllenden Kreises ist. Die Dichtlippe wird in diesem Ausführungsbeispiel nicht gegen die Stirnfläche der Mutter, sondern gegen die Oberfläche des durch die Schraubverbindung zu befestigenden Bauteils geschraubt. Die Wirkungen, d.h. die Vorteile sind dabei die gleichen wie bei der obenstehend erläuterten Ausführungsform.

Die Erfindung bietet aber auch die Möglichkeit, von einem Gewinde zur Befestigung der Schutzkappe auf der Schraubverbindung völlig abzusehen. Auch hier spielt die Rückstellkraft des Kunststoff-Schaums die entscheidende Rolle.

Demgemäß weist das Sackloch der Schutzkappe in einer weiteren Ausführungsform der Erfindung eine Kontur auf, die der Außenkontur der Mutter mit Untermaß entspricht. Dadurch kann die Schutzkappe bei entsprechender Ausrichtung auf die Mutter auf diese axial aufgeschoben werden. Das kann, je nach dem wie das Untermaß eingestellt ist, durch Handdruck oder aber Hammerschlag erfolgen. Bei diesem Aufdrücken federt der Schaum nach außen, legt sich dann aber aufgrund der resultierenden Rückstellkraft form- und kraftschlüssig an die Spannflächen der Mutter an. Durch den axialen Druck beim Aufdrücken der Schutzkappe auf die Mutter wird gleichzeitig der erforderliche Anpreßdruck für die Dichtlippe realisiert.

Diese Lösung ist insbesondere für Fälle gedacht, in denen das Ende des Gewindebolzens nicht über die obere Stirnfläche der Mutter hinausragt. Sie ist jedoch auch bei überstehendem Gewindebolzen anwendbar. In diesem Fall ist in einer weiteren Ausführungsform der Erfindung das Sackloch im Bereich des über die Mutter überstehenden Gewindebolzens in seiner lichten Weite so weit verringert, daß der Gewindebolzen gerade noch radial zwängungsfrei bleibt. Auch hier erfolgt dann die Festlegung der Schutzkappe durch ein Festklemmen auf der Mutter. Der Gewindebolzen wird dabei zwängungsfrei in dem radial eingeengten Sackloch aufgenommen. Es ist dabei natürlich aus Gründen der Materialökonomie von Vorteil, wenn die Schutzkappe dieser Reduzierung auch in ihren Außenabmessungen folgt.

Neben den oben dargestellten Vorteilen einer erfindungsgemäßen Schutzkappe sind weitere Vorteile darin zu sehen, daß die Schutzkappen mehrfach benutzt werden können, ohne daß ihre Vorspannkraft verloren geht. Des weiteren schützt der Kunststoff-Schaum die Schraubverbindung auch in hervorragender Weise gegen Schlagbeanspruchung. Als Material für die Schutzkappe kommt z.B. Polyethylen oder Polypropylen in Frage.

Die Erfindung wird nachstehend anhand von Ausführungsbeispielen näher erläutert. In der dazugehörigen Zeichnung zeigt:
- Fig. 1: einen schematischen Schnitt durch eine auf eine Schraubverbindung aufgesetzte Schutzkappe in einer ersten Ausführungsform,
- Fig. 2: eine Draufsicht auf die in Fig. 1 dargestellte Schutzkappe,
- Fig. 3: einen schematischen Schnitt durch eine auf eine Schraubverbindung aufgesetzte Schutzkappe in einer zweiten Ausführungsform,
- Fig. 4: eine Draufsicht auf die in Fig. 3 dargestellte Schutzkappe,
- Fig. 5: einen schematischen Schnitt durch eine auf eine Schraubverbindung aufgesetzte Schutzkappe in einer dritten Ausführungsform,
- Fig. 6: eine Draufsicht auf die in Fig. 5 dargestellte Schutzkappe,
- Fig. 7: einen schematischen Schnitt durch eine auf eine Schraubverbindung aufgesetzte Schutzkappe nach einer vierten Ausführungsform, und
- Fig. 8: eine Draufsicht auf die in Fig. 7 dargestellte Schutzkappe.

Alle in der Zeichnung dargestellten Schutzkappen 4 bestehen aus einem geschlossenzellig geschäumten thermoplastischen Kunststoff z.B. Polyethylen. Sie dienen dem Schutz einer aus Gewindebolzen 1 und Mutter 2 bestehenden Schraubverbindung, durch die ein Teil 3 befestigt wird.

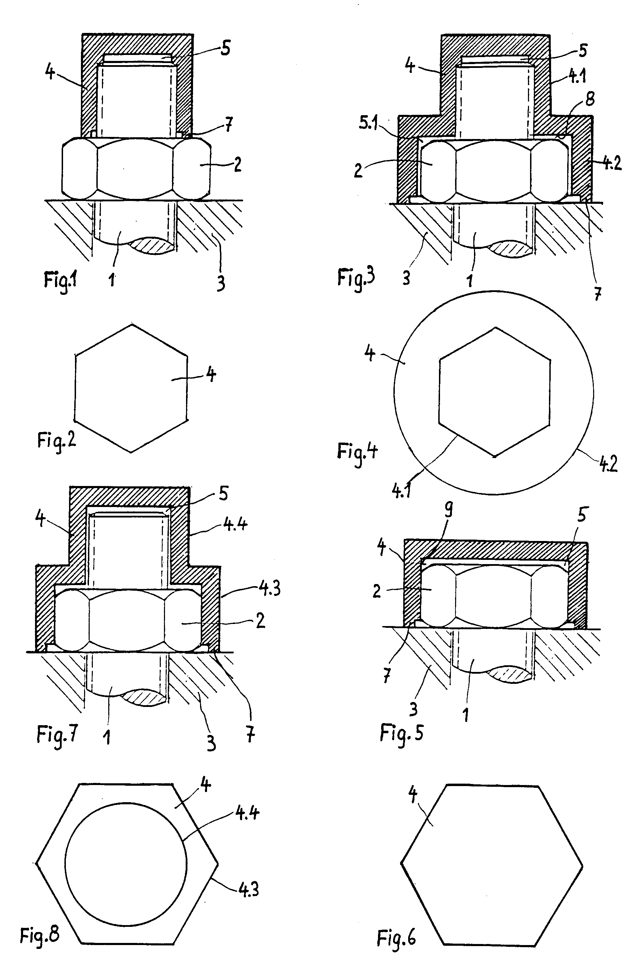

Die in den Fig. 1 und 2 gezeigte Schutzkappe 4 dient dem Schutz des über die Mutter 2 überstehenden Endes des Gewindebolzens 1 vor Korrosion und mechanischer Beschädigung. Sie besitzt ein zylindrisches Sackloch 5, dessen Durchmesser dem Kerndurchmesser des Gewindebolzens 1 entspricht. An der offenen Stirnfläche der Schutzkappe 4 ist eine umlaufende Dichtlippe 7 einstückig mit der Schutzkappe 4 ausgebildet. Sie hat eine geringere Wandstärke als der angrenzende Bereich der Schutzkappe 4 und ist dadurch stärker komprimierbar als dieser Bereich. Wie aus Fig. 2 hervorgeht, ist die Außenform der Schutzkappe 4 als Sechskant gestaltet.

Zum Festlegen auf der Schraubverbindung wird die Schutzkappe 4 mit ihrem Langloch 5 auf das Ende des Gewindebolzens 1 aufgesetzt und dann mit einem Schraubenschlüssel, das kann ein Maul-, Steck- oder Ringschlüssel sein, auf den Gewindebolzen 1 aufgedreht. Für die erfindungsgemäßen Schutzkappen 4 bietet sich insbesondere der Einsatz von Akkuschraubern an, da das Sackloch 5 selbstzentrierend wirkt.

Das Gewinde des Gewindebolzens 1 schneidet sich beim Aufdrehen in die Schutzkappe 4 ein. Aufgrund der Rückstellkraft des Kunststoff-Schaums stellt sich ein sehr fester Halt der Schutzkappe 4 auf dem Gewindebolzen 1 ein. Am Ende des Aufschraubvorganges kommt die Dichtlippe 7 in Kontakt mit der Mutter 2. Die Schutzkappe 4 wird nun noch geringfügig weiter auf den Gewindebolzen 1 aufgeschraubt, um eine ausreichende Anpressung der Dichtlippe 7 an die Mutter 2 zu erreichen. Daß eine ausreichende Anpressung erreicht ist, ist daran zu erkennen, daß sich die Dichtlippe 7 etwas nach außen ausbeult. Es versteht sich von selbst, daß die Tiefe des Sackloches 5 so bemessen ist, daß die Schutzkappe 4 genügend weit auf den Gewindebolzen 1 aufschraubbar ist.

Aufgrund der Selbsthemmung der Schutzkappe 4 auf dem Gewindebolzen 1 wirkt sie als Kontermutter, so daß die Mutter 2 gleichzeitig auch gegen Lösen gesichert ist.

Das Lösen der Schutzkappe 4 von der Schraubverbindung ist aufgrund ihres starken Festsitzes auf dem Gewindebolzen 1 nur mit einem Schlüssel möglich, das hat den Vorteil, daß die Schutzkappe 4 nicht ohne weiteres unbefugt gelöst werden kann.

Die in den Fig. 3 und 4 gezeigte Schutzkappe 4 dient nicht nur dem Schutz des freien Endes des Gewindebolzens 1, sondern gleichzeitig auch dem Schutz der Mutter 2. Bei dieser Ausführungsform der Schutzkappe 4 erweitert sich das Langloch 5 in einem Absatz 8 zur offenen Stirnseite hin. Der dadurch geschaffene erweiterte Bereich 5.1 ist so bemessen, daß bei aufgeschraubter Schutzkappe 4 die Mutter 2 zwängungsfrei aufgenommen werden kann. Die Außenkontur der Schutzkappe 4 folgt dieser Erweiterung des Sackloches 5, so daß ein Kopfteil 4.1 und ein Basisteil 4.2 gebildet sind. Das Kopfteil 4.1 ist als Außen-Sechskant ausgebildet, während das Basisteil 4.2 sowohl in seiner Innen- als auch Außenkontur zylindrisch ist.

Das Festlegen der Schutzkappe 4 auf der Schraubverbindung erfolgt, wie bei dem vorstehenden Ausführungsbeispiel auch, durch Aufdrehen der Schutzkappe 4 auf den Gewindebolzen 1. Allerdings dichtet hier die Dichtlippe 7 nicht auf der Mutter 2, sondern auf dem zu befestigenden Teil 3 ab.

In den Fig. 5 und 6 ist eine Schutzkappe 4 gezeigt, die Anwendung findet, wenn das Ende des Gewindebolzens 1 nicht aus der Mutter 2 herausragt. Diese Schutzkappe 4 besitzt ebenfalls ein Sackloch 5, dessen Innenkontur 9 der Außenkontur der Mutter 2 mit Untermaß entspricht, d.h. die lichte radiale Weite des Sackloches 5 ist etwas geringer als die Außenmaße der Mutter 2. Zum Festlegen auf der Schraubverbindung wird die Schutzkappe 4 axial auf die Mutter aufgesetzt und dann auf diese aufgedrückt. Das kann, je nach dem wie groß das Untermaß eingestellt ist, per Hand oder aber Hammerschlag erfolgen. Bei diesem Aufdrücken der Schutzkappe 4 auf die Mutter 2 federt der Kunststoff-Schaum etwas ein, legt sich aber dann aufgrund der daraus resultierenden Rückstellkraft form- und kraftschlüssig an die Außenkontur der Schraube 2 an. Durch das axiale Aufdrücken der Schutzkappe 4 wird gleichzeitig auch ein ausreichender Anpreßdruck für die Dichtlippe 7 an das zu befestigende Teil 3 realisiert.

Wie aus Fig. 6 hervorgeht, ist auch die Außenkontur der Schutzkappe 4 sechskantig. Dies ist jedoch nicht erforderlich; die Außenkontur der Schutzkappe 4 könnte hier auch zylindrisch sein oder eine andere Geometrie haben. Wesentlich ist, daß an allen Stellen eine ausreichende Wandstärke der Schutzkappe 4 vorliegt.

Die in den Fig. 7 und 8 dargestellte Ausführungsform einer Schutzkappe 4 zeigt, daß deren Festklemmen auf einer Mutter 2 auch möglich ist, wenn das Ende des Gewindebolzens 1 über die Mutter 2 übersteht. Diese Schutzkappe 4 besitzt ein Basisteil 4.3, das der Schutzkappe gemäß den Fig. 5 und 6 entspricht, an das sich mit Absatz ein Kopfteil 4.4 anschließt. Dieses Kopfteil 4.4 nimmt das überstehende Ende des Gewindebolzens 1 zwängungsfrei auf, indem sein Sackloch 5 eine entsprechende lichte Weite aufweist.

## Patentansprüche

1. Schutzkappe aus thermoplastischem Kunststoff für Schraubverbindungen, die an ihrem offenen Stirnrand eine Dichtlippe mit geringerer Wandstärke als der sich einstückig anschließende Bereich der Schutzkappe aufweist, dadurch gekennzeichnet, daß der Kunststoff geschlossenzellig geschäumt ist und die Schutzkappe unter Ausnutzung der Rückstellkraft des Kunststoff-Schaums auf der Schraubverbindung (1, 2) festlegbar ist.

2. Kunststoff-Schutzkappe nach Anspruch 1, dadurch gekennzeichnet, daß sie auf ihrer Außenseite als Mehrkant-Profil zum Ansatz eines Schraubenschlüssels ausgebildet ist und ein zylindrisches Sackloch (5) aufweist, dessen Durchmesser kleiner als der Außendurchmesser des Gewindebolzens (1) ist.

3. Kunststoff-Schutzkappe nach Anspruch 2, dadurch gekennzeichnet, daß sich das Sackloch (5) in einem Absatz (8) zum offenen Stirnrand hin auf einen Durchmesser erweitert, der gleich oder größer als der Durchmesser eines die Mutter (2) umhüllenden Kreises ist, wobei der erweiterte Bereich (5.1) des Sackloches (5) bei aufgeschraubter Schutzkappe (4) die Mutter (2) umhüllt.

4. Kunststoff-Schutzkappe nach Anspruch 1, dadurch gekennzeichnet, daß sie ein Sackloch (5) aufweist, dessen Innenkontur (9) der Außenkontur der Mutter (2) mit Untermaß entspricht.

5. Kunststoff-Schutzkappe nach Anspruch 4, dadurch gekennzeichnet, daß sich das Sackloch (5) im Bereich eines über die Mutter (2) überstehenden Endes eines Gewindebolzens (1) in seiner lichten Weite so weit verringert, daß das Ende des Gewindebolzens (1) gerade noch radial zwängungsfrei bleibt.

6. Kunststoff-Schutzkappe nach Anspruch 5, dadurch gekennzeichnet, daß die Außenkontur der Schutzkappe (4) dieser Verringerung der lichten Weite des Sackloches (5) folgt.
